(19) Europäisches Patentamt
European Patent Office
Office européen des brevets

(11) Publication number: 0 077 036
B1

(12) # EUROPEAN PATENT SPECIFICATION

(45) Date of publication of patent specification: 08.01.86

(21) Application number: 82109302.8

(22) Date of filing: 07.10.82

(51) Int. Cl.⁴: C 07 F 7/10, C 08 K 5/54, C 08 L 75/04, C 08 L 61/04, C 08 G 77/26, B 22 C 1/20, C 04 B 26/32

(54) **Binding agent compositions.**

(30) Priority: 08.10.81 US 309657

(43) Date of publication of application: 20.04.83 Bulletin 83/16

(45) Publication of the grant of the patent: 08.01.86 Bulletin 86/02

(84) Designated Contracting States: AT BE CH DE FR GB IT LI LU NL SE

(56) References cited:
US-A-3 650 814
US-A-3 671 562
US-A-3 702 860
US-A-3 754 971
US-A-3 895 043
US-A-4 046 794
US-A-4 124 556
US-A-4 193 909

Ullmanns Encyclopädie der technischen Chemie, 4 ed. vol. 21, p. 500

(73) Proprietor: UNION CARBIDE CORPORATION
Old Ridgebury Road
Danbury Connecticut 06817 (US)

(72) Inventor: Marsden, James Glenn
Noel Court
Amawalk New York 10501 (US)
Inventor: Pepe, Enrico James
Noel Court
Amawalk New York 10501 (US)

(74) Representative: Wuesthoff, Franz, Dr.-Ing. et al
Patentanwälte Wuesthoff -v. Pechmann-Behrens-Goetz Schweigerstrasse 2
D-8000 München 90 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 077 036 B1

**Description**

1. Field of the invention

This invention relates to binding agent compositions having especially good shelf life which can be used with inorganic fillers or oxides, such as foundry sand, for the purpose of imparting improved strength to shapes, such as foundry molds or cores, made therefrom. The invention also relates to inorganic oxide compositions, such as foundry sand compositions, containing the inorganic oxide, the improved binding agent composition and catalysts for said binding agent. The invention also relates to certain unreido-functional organosilicon compounds having use in binding agent compositions for foundry sands.

2. Description of the prior art

It is well known in the art that one can impart general improved strengths and increased humidity resistance to foundry cores by adding a silane compound to the resinous foundry binder used to form the cores. Foundry cores made with such resinous binders as phenolic/isocyanate systems, furan systems, oil modified polyol/polyisocyanate systems, phenolic resins and urea/phenolic resins have a tendency to lose strength and become weak upon exposure to humid conditions. As illustrated by U.S. Pats. 3,409,579 and 3,403,721, silane compounds have been added to such resinous binders to increase the humidity resistance and general strength of foundry cores made with these binders. Aqueous dispersions of silane compounds have also been used as binders themselves (see U.S. Pat. No. 3,093,494).

It is known that aminoalkyl trialkoxysilanes, such as γ-aminopropyltrimethoxysilane, improve the adherence of thermosetting resins to inorganic oxide materials. It is furthermore known that these aminosilanes can be mixed with thermosetting phenolic resins and then the resulting mixtures can be mixed directly with sands or other inorganic oxide material to be shaped and solidified (DE—AS No. 1,252,853 and DE—PS No. 1,494,381).

The use of N-(aminoalkyl)-aminoalkylsilanes as adhesion improvers between thermosetting resins and inorganic oxide material is also known. These compounds are used in the same manner as the above-mentioned aminosilanes in which there is no substitution on the nitrogen atom (U.S. Pat. No. 3,234,159).

Both the aminoalkylsilanes which are not substituted on the nitrogen atom and those which are substituted by aminoalkyl groups, all of which are referred to hereinafter as aminosilanes, improve the adhesion of thermosetting phenolic resins to inorganic oxide substances to virtually the same degree when they are mixed with the resins. This improvement of adhesion, however, diminishes in the course of time if these aminosilane-containing resins are stored for a relatively long time at room temperature. U.S. Pat. No. 4,256,623 reports that, after standing for only 14 days, for example, the adhesion-improving action of aminosilanes declines by about 40%, and at the end of only a month the adhesivizing effect produced by γ-aminopropyltriethoxysilane in phenolic resin has been reduced by one half. This problem was solved by using ω-aminoalkyltrialkoxysilanes $H_2N-(CH_2)\mu-Si(OR)_3$ ($\mu$=2-4, R=$C_1$ to $C_4$ alkyl) or N-(aminoalkyl)aminoalkylsilanes

$$H_2N-(CH_2)_m-NH-(CH_2)_m-Si(OR)_3$$

(m=2 or 3) as coupling agents in binder compositions, especially in foundry sand compositions.

It has been further reported that the loss of the adhesivizing action of the aminosilanes in mixture with thermosetting resins is probably due to a decomposition of these silanes in the resins. Therefore, there existed the problem of finding an adhesivizing agent which, when mixed with thermosetting resins, decomposes very slightly or not at all, and produces its adhesivizing action to the same or an only slightly lesser extent, even after the resin has been stored for a relatively long time and which therefore will be useful in the preparation of binding agents for inorganic oxide materials such as, for example, foundry sands, such binding agents being made from ureido-functional silanated phenolic resins whose strength enhancing effectiveness will remain unaltered or only slightly reduced, even after a relatively long period of storage.

U.S. Pat. Nos. 3,671,562; 3,754,971 and 4,046,794 disclose ureido-functional organosilicon compounds and the use of same as coupling agents on inorganic substrates such as glass, clay, silica, hydrated silica, fumed silica, sand, e.g., foundry sand.

These patents fail to disclose or suggest the binding agent compositions or the foundry sand compositions disclosed and claimed herein containing a selected group of ureido-functional organosilicon compounds. From U.S.P. 40 46 794 silicon compounds are known, characterized by the presence of the following radical:

$$(H_2N-\overset{\overset{O}{||}}{C})-R-Si$$

wherein at least one of three valences of the silicon atom are bonded directly to hydrolyzable groups such as alkoxy, acyloxy, aryloxy, amino, and the like, and/or oxygen which in turn is bonded to other silicon

atoms to form a siloxane. The remaining free valences of the silicon atom are bonded by carbon to silicon bonds to monovalent organic groups. In the above formula I, R is an alkylene radical containing at least 3 carbon atoms and at least 1 nitrogen atom therein bonded to each $(H_2NCO-)$ to form

$$(H_2NCON{<});$$

at least one free valence of

$$(H_2NCON{<})$$

is bonded to an alkylene carbon atom of R, any other free valences thereof are bonded to either hydrogen, alkyl, aryl, cycloalkyl, aralkyl, and the like; any nitrogen in R is separated from silicon by at least three sequential carbon atoms; and n is at least 1 and typically not greater than about 3.

Said compounds, as aqueous solution of the hydrolysates can be coupling agents in fiber glass for further reaction with thermosetting and/or thermoplastic resins. The stability of the composites obtained, especially in hot water, is not very good.

In general, organofunctional silanes are widely used as additives to polymerizable resins to provide improved adhesion of the resin to substrates and to improve the physical properties of composites prepared from the resin and fibrous and/or particulate materials. A specific application of this general use is the addition of organofunctional silicon compounds to hardenable resin compositions used as binders for sand to form molds and cores for use in casting metal articles. It is important in this use that the improvement in properties, provided by adding an organofunctional silicon compound, be stable in respect to the age of the organofunctional silicon compound/resin mixture.

Summary of the invention

This invention is concerned with the discovery that certain ureido-functional silicon compounds have unexpected properties when employed as additives for the curable binder.

The invention relates to binding agent compositions for inorganic fillers or oxides comprising a curable binder such as a hardenable resin mixed with a coupling agent; the coupling agent being an ureido-functional organosilicon compound having:

(a) at least 1 silicon-bonded ureido group of the formula

$$[R'_2NC(O)-]_nR- \qquad (I)$$

wherein R is an aliphatic radical containing nitrogen, hydrogen and at least 5 carbon atoms wherein at least 1 nitrogen atom therein is bonded to each $[R'_2NC(O)-]$ to form

$$R'_2NCON{<},$$

at least 1 free valence of

$$R'_2NCON{<}$$

is bonded to an alkylene carbon atom of R, any other free valence of

$$R'_2NCON{<}$$

is bonded to a member selected from the group consisting of hydrogen, alkyl, aryl, cycloalkyl and aralkyl, any nitrogen atom in R is separated from silicon by at least 3 sequentially joined carbon atoms, R' is hydrogen, alkyl of 1 to 8 carbon atoms or a methylol group, preferably at least one R' group is hydrogen, most preferably both R' groups are hydrogen and n is at least 1;

(b) 2 silicon-bonded hydroxyl groups or hydrolyzable or condensible groups selected from alkoxy, acyloxy, amino and haloalkoxy; and

(c) any remaining free valence of silicon being bonded (1) to oxygen which in turn is bonded to another silicon atom to form therewith a siloxane or (2), to hydrogen or (3) by carbon to silicon bonds, to a

monovalent organic group selected from alkyl, acyl, cycloalkyl, aryl, alkaryl, aralkyl, alkenyl, alkadienyl, cycloalkenyl, haloalkyl, halocycloalkyl, cyanoalkyl, cyanoaryl, cyanocycloalkyl, carboxyalkyl, carboxyaryl, carboxycycloalkyl, isocyanatoaryl, isocyanatocycloalkyl, alkyl carboxyalkyl, aryl carboxyalkyl, hydroxyalkyl, hydroxy(polyalkyleneoxy)alkyl, alkenoyloxyalkyl, epoxyalkyl, epoxyalkyloxyalkyl, aminoaryl and aminoalkyl. The ureido-functional organosilicon compounds used in this invention preferably contain 1 to 10 silicon atoms.

Preferably the ureido-functional organosilicon compound is a silane having the average formula:

$$[(R'_2NC(O))_nR]_aSi(R'')_{2-a}X_2 \qquad \text{(II)}$$

wherein R, R' and n are as defined hereinabove, R'' is hydrogen or a monovalent organic group bonded to silicon by a carbon to silicon bond, selected from
alkyl, acyl, cycloalkyl, aryl, alkaryl, aralkyl, alkenyl, alkadienyl, cycloalkenyl, haloalkyl, halocycloalkyl, cyanoalkyl, cyanoaryl, cyanocycloalkyl, carboxyalkyl, carboxyaryl, carboxycycloalkyl, isocyanatoaryl, isocyanatocycloalkyl, alkyl carboxyalkyl, aryl carboxyalkyl, hydroxyalkyl, hydroxy(polyalkyleneoxy)alkyl, alkenoyloxyalkyl, epoxyalkyl, epoxyalkyloxyalkyl, aminoaryl and aminoalkyl; X is hydroxyl or a hydrolyzable or condensible radical, selected from
hydroxyl, alkoxy, acyloxy, aryloxy, amino and haloalkoxy; and a is 1 or 2.

Specific examples of ureido-functional organosilanes are,

$NH_2C(O)NH(CH_2)_2NH(CH_2)_3Si(Me)(OMe)_2$;

$NH_2C(O)NHCH_2CH(CH_3)(CH_2)_2Si(Me)(OEt)_2$;

$NH_2C(O)NH(CH_2)_2N[C(O)NH_2](CH_2)_3Si(Me)(OMe)_2$;

$NH_2C(O)NHC_2H_4NHC_2H_4NHC_3H_6Si(Me)(OEt)_2$;

$NH_2C(O)NH(CH_2)_2N[C(O)NH_2](CH_2)_2NH(CH_2)_3Si(Et)(OMe)_2$.

Included in the ureido-functional organosilicon compounds illustrated by formula I are relatively low molecular weight siloxanes, e.g., having 2 to 10 silicon atoms interconnected by silicon-bonded oxygen atoms forming

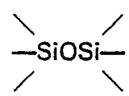

linkages. Ureido-functional organosiloxanes of this type have, per molecule, 2 silicon-bonded hydroxyl groups or 2 silicon-bonded hydrolyzable or condensible groups as defined above and at least 1 silicon-bonded group of the formula

$$[R'_2NC(O))_nR—$$

as defined in formula I and any remaining free valence of silicon is bonded to oxygen which in turn is bonded to another silicon atom to form therewith the siloxane, or, to hydrogen, or, by carbon to silicon bonds, to a monovalent organic group as defined above. The preferred ureido-functional organosiloxanes include the disiloxanes, trisiloxanes, tetrasiloxanes such as the cyclic tetramer, and the pentasiloxanes.

Typical monovalent organic groups bonded to silicon in the ureido-functional organosilicon compounds described above including R'' in the formula II include alkyl (e.g., methyl, ethyl, pentyl, dodecyl, octadecyl, and 2-ethylhexyl), cycloalkyl (such as cyclobutyl, cyclohexyl and 4-methylcyclohexyl), aryl (such as phenyl, 2-naphthyl, 2-anthracyl and biphenyl), alkaryl (such as 4-methylphenyl, 2,4-diethylphenyl and 4-dodecylphenyl), aralkyl (such as phenylethyl), alkenyl (such as vinyl, allyl 3-butenyl and oleyl), alkadienyl (such as 1-butadienyl-1,4,1-octadecatrienyl-9,11,13-, 1-neoprenyl), cycloalkenyl (such as 3-cyclohexenyl), haloalkyl (such as chloromethyl, gamma-chloropropyl, 3,3,3-trifluoropropyl, perfluoropropyl, haloaryl (such as 4-chlorophenyl, 2,4-dichlorophenyl, chloronaphthyl), halocycloalkyl (such as 4-chlorocyclohexyl), cyanoalkyl (such as beta-cyanoethyl and gamma-carboxypropyl); cyanoaryl (such as 4-cyanophenyl); cyanocycloalkyl (such as 4-cyanocyclohexyl and 3-cyanocyclopentyl) carboxyalkyl (such as beta-carboxyethyl and gamma-carboxypropyl), carboxyaryl (such as 4-carboxyphenyl); carboxycycloalkyl (such as 4-carboxycyclohexyl and 3-carboxycyclopentyl); isocyanatoalkyl (such as gamma-isocyanatopropyl and delta-isocyanatobutyl), isocyanatoaryl (such as 4-isocyanatophenyl); isocyanatocycloalkyl (such as 4-isocyanato-cyclohexyl); alkyl or aryl carboxyalkyl (such as betamethylcarboxyethyl and gammaphenyl carboxypropyl), hydroxyalkyl (such as hydroxymethyl, and gamma-hydroxypropyl), hydroxy(polyalkyleneoxy)alkyl (such as omega-hydroxy-(polyethyleneoxy)propyl), alkenoyloxyalkyl (such as gamma-acryloxypropyl and gamma-methacryloxypropyl) epoxyalkyl (such as 1,2-epoxyethyl, 1,2-epoxypropyl and 1,2-epoxybutyl), epoxy alkyloxyalkyl (such as glycidyloxypropyl); epoxycycloalkyl (such as beta-3,4-epoxycyclohexylethyl); aminoaryl and aminoalkyl (such as aminomethyl, gamma-aminopropyl, delta-aminobutyl and p-aminophenyl).

Typical of the hydrolyzable or condensible groups bonded to silicon in the ureido-functional organosilicon compounds described above including X in formula II include for example alkoxy, e.g., methoxy, ethoxy, propoxy, dodecyloxy, isopropoxy, and the like; aryloxy, e.g., phenoxy, naphthyloxy and biphenyloxy, alkylamino and arylamino, such as methylamino, diethylamino and phenylamino, acyloxy, e.g., formyloxy, acetyloxy and propoxy any organo-functional radicals such as hydroxyalkoxy, e.g., beta-hydroxyethoxy and gamma-hydroxypropoxy, hydroxyalkoxyalkoxy, such as beta-hydroxyethoxyethoxy, omega-hydroxy(polyethyleneoxy)ethoxy, and omega-hydroxy(poly-1,2-propyleneoxy, cyanoalkoxy, such as beta-cyanoethoxy and beta-cyanohexoxy, cyanoalkoxyalkoxy, such as beta-cyanoethoxyethoxy, omega-cyanoethoxy(polyethyleneoxy) and omega-cyanoethoxy(poly-1,2-propyleneoxy), carboxyalkoxy, such as beta-carboxyethoxy and beta-carboxyhexoxy, haloalkoxy, such as chloromethoxy, and bromoethoxy perfluoropropoxy.

The ureido-functional organosilicon compounds used in this invention can be produced by reacting an organocarbamate with an amino-functional organosilicon having:

(a) at least 1 silicon-bonded group of the formula

$$[R' \frac{}{}]_n R— \qquad (III)$$

wherein R, R′ and n are as defined in connection with formula I and each R′ which is present n times in formula III is bonded to a nitrogen atom of R;

(b) 2 silicon-bonded hydroxyl groups or hydrolyzable or condensible groups as defined hereinabove; and

(c) any remaining free valence of silicon being bonded to (1) oxygen which in turn is bonded to another silicon atom to form therewith a siloxane, or (2) to hydrogen or (3) by carbon to silicon bonds to a monovalent organic group as described hereinabove. The amino-functional organosilicon compounds used to make the ureido-functional organosilicon compounds employed herein preferably contain 1 to 10 silicon atoms. Suitable aminofunctional organosilicon compounds useful herein are disclosed in the prior art including USP 2,971,864, 2,832,754 and 2,942,019. Additional specific examples are gamma-aminopropylmethyldimethoxysilane, N-methyl-gamma-aminopropylmethyldimethoxysilane, N-(gamma-aminopropyl)-gamma-aminopropylmethyldimethoxysilane, N-(gamma-aminopropyl)-N-methyl-gamma-aminopropylmethyldimethoxysilane and gamma-aminopropylethyldiethoxysilane.

Organocarbamates used to produce the ureido-functional organosilicon compounds used in this invention include alkyl, cycloalkyl or aryl carbamates illustrated by methyl carbamate, ethyl carbamate, and n-propyl carbamate, n-butyl carbamate, cyclohexylcarbamate phenyl carbamate, 4-methylphenyl carbamate, 4-dodecyl phenyl carbamate, biphenyl carbamate; and alkylene, cycloalkylene and arylene carbamates, such as ethylene dicarbamate, 1,4-butylene dicarbamate, 1,4-phenylene dicarbamate, 4,4′-bisphenylene dicarbamate and 1,4-cyclohexylene dicarbamate.

The reaction can be carried out neat or in solution or dispersion using solvents or nonsolvents for the silane and/or the carbamate reactants. Types of solvents and nonsolvents include hydrocarbon solvents, ether solvents, amide solvents and ketone solvents, such as mineral spirits, hexane, n-nonane, benzene, toluene, xylene, methylethyl ketone, methylisobutyl ketone, diethylether, di-n-diisopropyl ether and N,N,-dimethylformamide.

The temperature of the reaction can be relatively low depending upon the reactivity of the carbamate and the amount of amino present in the reaction, usually temperatures in the range of 40°C to 180°C are satisfactory. Typically a temperature 50°C to 150°C. is more desirable.

This reaction can be operated under atmospheric or subatmospheric pressures. Superatmospheric pressures are employable but are not considered to operate as beneficially as subatmospheric and atmospheric pressures. The reaction product can be separated by distillation, crystallization or decantation, utilizing standard processing equipment and procedures.

There are other alternative ways known in the art for producing the ureido-functional organosilicon compounds and any suitable procedure can be used. For example, the corresponding isocyanato functional organosilicon compound can be reacted with ammonia to produce the corresponding ureido-functional organosilicon compound. Also, alkylation or methylolation of one or both of the R′ groups can be performed on the amino-functional organosilicon compound in which both R′ groups are hydrogen or on the ureido-functional organosilicon compound in which both R′ groups are hydrogen.

This invention is primarily directed to improvements in foundry sands and foundry cores and molds made therefrom. The foundry sands useful in the present invention are conventional foundry sands such as silica sands having a high silica content, for example a silica content of, at least 80% by weight. Examples of such foundry sands are (1) white silica sands such as Wedron White Silica sand, (99.8% by weight silica), Ottawa White Silica sand (99.8% silica), Minnesota White Silica sand (98.5% silica); (2) lake sands, such as Port Crescent sand (95.0% silica), Manley 20KK sand (91.9% silica), Nugent Lake sand (94.2% silica), Lake Shore sand (93.5% silica); and (3) bank sands such as Juniada Bank sand (90.2% silica). These foundry

sands normally have a Grain Fineness Number (GFN) of 50 to 90, as determined by the standard AFS method.

Other inorganic oxides or fillers can be bound by the binding agents pursuant to this invention and they include any suitable fibrous or particulate inorganic substance. At the time of mixing the binding agent with the fillers, the fillers may be in the form of particles, spherical or approximately isometric, or they may be in the form of plates or needles (fibers). The size of the filler particles is not critical, any of the conventionally used fillers being suitable in this respect. Among the specific fillers which may be used in the present invention are asbestos, ground glass, kaolin and other clay minerals, silica, calcium silica, magnesium oxide, barium carbonate barium sulfate (barytes), metal fibers and powders, glass fibers, refractory fibers, non-reinforcing carbon blacks, titanium dioxide, mica, talc, chopped glass, alumina, quartz, wollastonite (calcium silicate), and inorganic coloring pigments.

The curable binders useful in the binding agent compositions of this invention are polymerizable or thermosetting to form three-dimensional structures and are capable of binding the inorganic oxide or filler into a shaped mass. Included as examples of suitable curable binders are the foundry binders or hardenable resins which when used with the above ureido-functional silicon compounds show improved strength or resistance to humidity in the foundry core. Generally these foundry binders are the phenolic/polyisocyanate binder systems (U.S. Pat. 3,409,579) furan binder systems (U.S. Pat. 3,346,534) oil modified polyol/polyisocyanate binder systems (U.S. Pat. 3,255,500) and phenolic and urea/phenolic resin binder systems (U.S. Pats. 3,404,198 and 3,306,864).

Further illustrative of resins which can be effectively bonded include the thermosetting resins, such as the phenol formaldehyde resins, melamine-formaldehyde resins, alkyd resins, polyurethane resins and epoxy resins,

It is quite surprising that cold-setting resins, such as phenol-formaldehyde resins, for example, which contain ureido-functional organosilicon compounds undergo little or no loss of their ability to adhere to fillers or inorganic oxide materials, the absolute adhesivity of these binding agents being equal to or in some cases even greater than that of conventional aminosilanes coupling agents. The stability of ureido-functional organosilicon compounds in cold setting-resins was unexpected and applies to those cases where none or one or more or all of the hydrogen atoms of the ureido group $H_2NC(O)NH$— are substituted by an alkyl group or aryl group.

More broadly, the invention can be applied to substantially any polymeric material in which improved adhesion to fillers or inorganic oxides is desired, including, for example, any of the rubbers, resins or plastics with which fillers, e.g., inorganic oxides, are conventionally employed. Such polymers include natural rubber; synthetic rubbers such as styrene-butadiene rubber; ethylene-propylene terpolymer rubber; urethane rubbers; polyolefins such as polyethylene, polypropylene, and polyisobutylene; poly-acrylonitrile; polybutadiene; copolymers of butadiene and acrylonitrile; polystyrene; poly(styreneacrylonitrile); copolymers of styrene with butadiene and acrylonitrile; copolymers of ethylene with propylene or butene-1 or vinyl acetate or maleic anhydride; polycarbonate resins; phenoxy resins, polyvinyl chloride; copolymers of vinyl chloride with vinyl acetate or other vinyl esters; polyvinyl acetate; linear polyesters; polyvinyl acetals; polyvinylidene chloride; copolymers of vinylidene chloride with vinyl chloride and acrylic acid; poly(methyl methacrylate); super-polyamides, e.g. nylon; polysulfones; allyl resins such as a polymer of diallyl phthalate; epoxy resins, phenolic resins; silicone resins; polyester resins including alkyd resins; poly(vinylacetate-vinyl chloride); poly(vinylidene chloride); thermoplastic polyurethanes; thermoplastic polyhydroxy ethers; thermoplastic polyesters and poly(vinyl chloride-maleic anhydride).

Preferred polymeric matrices are the thermosetting or curable resins, such as the hardenable foundry sand resins as described above.

The proportions of ureido-functional organosilicon compound and curable binder in the novel binding agent compositions of this invention can be varied over a wide range. For example, the novel compositions can contain from 0.01 to 5, preferably 0.05 to 2, weight parts of ureido-functional organosilicon compound per 100 weight parts of curable binder. The proportions of binding agent composition and sand used in making the novel foundry sand compositions of this invention can be varied over a wide range and are generally the same respectively as the proportions of coupling agent and sand conventionally employed in the art. While the ureido-functional organosilicon compounds can be employed undiluted, it usually is more convenient to employ them as solutions, e.g., 25 to 95%, in suitable solvents such as methanol, ethanol or isopropanol because such solutions are easier to handle and disperse in the curable binder.

Detailed description of the invention

The lettered Examples do not represent this invention and are for comparison purposes.

The following designations used in the Examples and elsewhere herein have the following meanings:

Me: methyl group
Et: ethyl group
%: percent by weight unless otherwise specified
wt: weight
parts: parts by weight unless otherwise indicated
pts: parts by weight unless otherwise indicated

Preparation of $NH_2C(O)NHC_2H_4NHC_3H_6Si(Me)(OMe)_2$—Compound A

Into a 250 $cm^3$, 3-neck round bottom flask equipped with distillation head, mechanical stirrer, thermometer with thermo-watch and nitrogen atmosphere, was charged 70.0 g $NH_2C_2H_4NHC_3H_6Si(Me)(OMe)_2$ (Compound B) plus 25.5 g methyl carbamate plus 0.10 g. dibutyl tin oxide.. The reaction mixture was heated at 105°C for 15 hours. Amine titration was used to follow the extent of the reaction. The reaction was stopped at 93% completion. The product was stripped of methanol on a Rota-evaporator. The structure of the product as Compound A was confirmed by $^{13}C$ nuclear magnetic resonance spectroscopy (NMR). In addition to the structure given above for Compound A, $^{13}C$ NMR suggested the formation of a small amount of cyclic structure. A 50 wt.% solution of the Compound A product in methanol was prepared.

Preparation of $NH_2C(O)NHCH_2CH(CH_3)C_2H_4Si(Me)(OEt)_2$—Compound C

Into a 250 $cm^3$, 3-neck round bottom flask equipped with distillation head, mechanical stirrer, thermometer with thermo-watch and nitrogen atmosphere, was charged 60.0 g $NH_2CH_2CH(Me)C_2H_4Si(Me)(OEt)_2$ (Compound D) plus 24.4 g ethyl carbamate plus 0.10 g dibutyl tin oxide. The reaction mixture was heated at 105°C for 15 hours. Amine titer showed 93% completion. The product was stripped of ethanol on a Rota-evaporator. The structure of the product as Compound C was confirmed by $^{13}C$ nuclear magnetic resonance spectroscopy. A 50 wt.% solution of the product Compound C in methanol was prepared.

$$NH_2C(O)NHC_2H_4\underset{}{\overset{\overset{\displaystyle C(O)NH_2}{|}}{N}}C_3H_6Si(Me)(OMe)_2$$

Preparation of $NH_2C(O)NHC_2H_4N(C(O)NH_2)C_3H_6Si(Me)(OMe)_2$—Compound E

Into a 250 $cm^3$ 3-neck round bottom flask equipped with distillation head, mechanical stirrer, thermometer with thermo-watch and nitrogen atmosphere, was charged 70 g Compound B plus 51 g methyl carbamate plus 0.12 g dibutyl tin oxide. The reaction mixture was heated for 15 hours at 105°C. Amine titer showed 86% completion. The product was stripped of methanol on a Rota-evaporator. The product was an orange viscous liquid. A 50 wt.% product/methanol solution was prepared. The structure of the product as given above for Compound E was confirmed by $^{13}C$ NMR; however, there were 1 or 2 unidentifiable smaller amounts of by-products present.

Examples 1—3, A and B

5 foundry sand compositions were prepared containing the ingredients and amounts of same given in Table 1 below. In Examples 1, 2 and 3 0.19 millimole of Compound A, C and E, respectively, were used in the composition and in Example B, 0.19 millimole of a commercial coupling agent, A-1160, having the formula $NH_2C(O)NHC_3H_6Si(OEt)_3$ was used. Example A was a control and no coupling agent was used.

TABLE 1
Foundry sand formulation

| Ingredient | Grams |
|---|---|
| AFS Testing Sand 50—70 | 1500.00 |
| Phenolic Binder* | 27.90 |
| Catalyst, Toluene Sulfonic Acid | 7.00 |
| $H_2O$** | 0.75/1.50 |

* 1.9% commodity resin based on sand weight. Resin is a commercial phenolic foundry resin supplied by Borden Chemical and identified as Thor F. B. 142 without silane coupling agent. 25% catalyst based on commodity resin.

** Due to extreme variation (35—95% RH) in humidity during these preparations, the formulations had to be adjusted accordingly. On dry days (<50% RH) 1.5 g $H_2O$ was required and on humid days (>50% RH) 0.75 g of $H_2O$ was required to ensure uniform processing parameters and consistent control values.

In Examples B, 1, 2 and 3 0.19 millimole of the silane coupling agent was added to the 27.9 grams of the phenolic binder and the resulting blend was stirred with a magnetic stirrer for 2 to 4 hours at room temperature. A portion of each resulting mixture was evaluated initially using the procedure described hereinafter and the remaining portion of each mixture was allowed to age for 1 month at room temperature and then evaluated.

In evaluating each mixture of Examples B, 1, 2 and 3 and in evaluating the control Example A, 1500 g of sand were charged to the mixing bowl. While mixing at slow speed the required amounts of water and catalyst were added, separately, via syringe and mixed for 2 minutes. The resin phenolic binder (Example A) or phenolic binder/silane coupling agent mixture (Examples B, 1, 2 and 3), was added via syringe and mixing carried out for an additional 2 minutes. Immediately following completion of mixing, the molds were filled with the resulting sand mixtures, heaping full without compacting. The sand mixture was then pressed in firmly with the #14 rubber stopper. Additional sand mixture was then heaped above the mold and smoothed off with a trowel. The resulting tensile specimens were allowed to stand for 24 hours after preparation and then tested. The tensile specimens were tested for tensile strength using a jig designed for testing briquets (ASTM C-190-63). The cross-head speed was 5 mm/min. The tensile strengths, initially and after 1 month age, of the phenolic binder/silane coupling agent mixtures (Examples B, 1, 2 and 3) and the tensile strengths for the control (Example A) are given in Table 2 below.

TABLE 2

| Ex. No. | Coupling agent | Tensile Strength ($lbs/in^2$) $N/cm^2$ Initial | 1-Month age |
|---|---|---|---|
| A | Control (no coupling agent) | (220) 152 | (220) 152 |
| B | A-1160 $NH_2\overset{O}{\overset{\|}{C}}NHC_3H_6Si(OC_2H_5)_3$ | (295) 203 | (215) 148 |
| 1 | Compound A | (290) 200 | (290) 200 |
| 2 | Compound C | (310) 214 | (285) 197 |
| 3 | Compound E | (335) 231 | (285) 197 |

The test results given in Table 2 prove the superior performance stability of each of the silane coupling agents of this invention, namely, Compounds A, C and E, as compared to the control (Example A) and the state-of-the-art silane coupling agent (Example B).

## Claims

1. Binding agent composition for inorganic oxides comprising a curable binder and an organosilicon compound coupling agent characterized in the organosilicon coupling agent contains per molecule:

(a) at least 1 silicon-bonded group of the formula

$$[R'_2NC(O)\text{-}]_nR-$$

wherein R is an aliphatic radical containing nitrogen, hydrogen and at least 5 carbon atoms wherein at least 1 nitrogen atom therein is bonded to each

$$R'_2NCO- \text{ to form } R'_2NCON\!<\ ,$$

at least 1 free valence of

$$R'_2NCON\!<$$

is bonded to an alkylene carbon atom of R, and other free valence of

$$R'_2NCON\!<$$

is bonded to a member selected from hydrogen, alkyl, aryl, cycloalkyl and aralkyl, any nitrogen atom in R is separated from silicon by at least 3 sequentially joined carbon atoms; R' is hydrogen, alkyl having 1 to 8 carbon atoms or methylol; and n is at least 1;

(b) 2 silicon-bonded hydroxyl groups or hydrolyzable or condensible groups selected from alkoxy, acyloxy, amino and haloalkoxy; and

(c) any remaining free valence of silicon being bonded (1) to oxygen which in turn is bonded to another silicon atom to form therewith a siloxane or (2) to hydrogen or (3) by carbon to silicon bonds, to a monovalent organic group selected from alkyl, acyl, cycloalkyl, aryl, alkaryl, aralkyl, alkenyl, alkadienyl, cycloalkenyl, haloalkyl, halocycloalkyl, cyanoalkyl, cyanoaryl, cyanocycloalkyl, carboxyalkyl, carboxyaryl, carboxycycloalkyl, isocyanatoaryl, isocyanatocycloalkyl, alkyl carboxyalkyl, aryl carboxyalkyl, hydroxyalkyl, hydroxy (polyalkyleneoxy)-alkyl, alkenoyloxyalkyl, epoxyalkyl, epoxyalkyloxyalkyl, aminoaryl and aminoalkyl.

2. Binding agent as claimed in claim 1 wherein the organosilicon compound is a siloxane having, per molecule, 2 silicon-bonded hydroxyl groups or 2 silicon-bonded hydrolyzable or condensible groups as defined in claim 1 and at least 1 silicon-bonded group of the formula

$$[R'_2NC(O)-]_nR-$$

as defined in claim 1 and any remaining free valence of silicon is bonded to oxygen which in turn is bonded to another silicon atom to form therewith the siloxane, or, by carbon to silicon bonds, a monovalent organic group as defined in claim 1.

3. Binding agent as claimed in claim 2 wherein said siloxane is a disiloxane, a trisiloxane, a tetrasiloxane or a pentasiloxane or a cyclic tetrasiloxane.

4. Binding agent as claimed in claims 1 to 3 wherein the curable binder is a phenolic resin.

5. The use of the binding agent composition as claimed in claims 1 to 4 in a foundry sand composition containing foundry sand, the binding agent and a catalyst for the curable resin.

**Patentansprüche**

1. Bindemittelmischung für anorganische Oxide enthaltend einen härtbaren Binder und eine Organosiliciumverbindung als Kupplungsmittel, dadurch gekennzeichnet, daß das Organosilicium-Kupplungsmittel im Molekül enthält:

a) zumindest eine an Silicium gebundene Gruppe der Formel

$$[R'_2NC(O)-]_nR-,$$

worin R eine aliphatische Gruppe enthaltend Stickstoff, Wasserstoff und zumindest 5 Kohlenstoffatome ist, wobei zumindest ein Stickstoffatom jeweils an eine Gruppe $R'_2NCO-$ gebunden ist unter Bildung der Gruppierung

$$R'_2NCON\langle ,$$

zumindest eine freie Valenz der Gruppierung

$$R'_2NCON\langle$$

an einen Alkylen-Kohlenstoffatom von R hängt und eine andere freie Valenz von

$$R'_2NCON\langle$$

gebunden ist an Wasserstoff, Alkyl, Aryl, Cycloalkyl und/oder Aralkyl und in dem Substituenten R jedes Stickstoffatom vom Siliciumatom durch zumindest 3 aufeinanderfolgende Kohlenstoffatome getrennt ist, R' Wasserstoff, eine Alkylgruppe mit 1 bis 8 Kohlenstoffatomen oder Methylol sein kann und n zumindest 1 ist;

b) 2 an Silicium gebundene Hydroxylgruppen oder hydrolysierbare oder kondensierbare Gruppen in Form von Alkoxy, Acyloxy, Amino- oder Halogenalkoxy und

c) an den restlichen freien Valenzen des Siliciums (1) ein Sauerstoffatom, welch letzteres an einem Siliciumatom hängt unter Bildung eines Siloxans oder (2) ein Wasserstoffatom oder (3) ein Kohlenstoffatom unter Bildung einer C-Si-Bindung einer einwertigen Gruppe in Form von Alkyl, Acyl, Cycloalkyl, Aryl,

Alkaryl, Aralkyl, Alkenyl, Alkadienyl, Cycloalkenyl, Halogenalkyl, Halogencycloalkyl, Cyanalkyl, Cyanaryl, Cyancycloalkyl, Carboxyalkyl, Carboxyaryl, Carboxycycloalkyl, Isocyanatoaryl, Isocyanatocycloalkyl, Alkylcarboxyalkyl, Arylcarboxyalkyl, Hydroxyalkyl, Hydroxy(polyalkylenoxy)-alkyl, Alkenoyloxyalkyl, Epoxyalkyl, Epoxyalkyloxyalkyl, Aminoaryl und Aminoalkyl.

2. Bindemittelmasse nach Anspruch 1, worin die Organosiliciumverbindung ein Siloxan mit 2 Si-gebundenen Hydroxylgruppen oder 2 Si-gebundenen hydrolisierbaren oder kondensierbaren Gruppen nach Anspruch 1 und zumindest einer Si-gebundenen Gruppe der Formel

$$[R'_2NC(O)-]_nR-$$

nach Anspruch 1 ist und die restlichen freien Valenzen des Siliciums an ein Sauerstoffatom gebunden sind, des seinerseits mit einem anderen Siliciumatom unter Bildung des Siloxans verbunden ist, oder an ein Kohlenstoffatom für eine C-Si-Bindung einer einwertigen organischen Gruppe nach Anspruch 1.

3. Bindemittelmasse nach Anspruch 2, worin das Siloxan ein Disiloxan, Trisiloxan, Tetrasiloxan, Pentasiloxan oder ein zyklisches Tetrasiloxan ist.

4. Bindemittelmasse nach einem der Ansprüche 1 bis 3, worin der härtbare Binder ein Phenolharz ist.

5. Verwendung der Bindemittelmasse der Ansprüche 1 bis 4 für Gießereiformsande enthaltend Sand, Bindemittel und einen Katalysator für das härtbare Harz.

**Revendications**

1. Composition de liant pour oxydes inorganiques comprenant un liant réticulable et, comme agent de couplage, un composé organique de silicium, caractérisée en ce que le composé organique de silicium utilisé comme agent de couplage contient, par molécule:

(a) au monis 1 groupe lié au silicium, de formule

$$[R'_2NC(O)-]_nR-$$

dans laquelle R est un radical aliphatique contenant de l'azote, de l'hydrogène et au moins 5 atomes de carbone, dont au moins 1 atome d'azote est lié à chaque groupe

$$R'_2NCO\text{-pour former } R'_2NCON<\ ,$$

au moins 1 valence libre de

$$R'_2NCON<$$

est liée à un atome de carbone d'alkylène de R et l'autre valence libre de

$$R'_2NCON<$$

est liée à un membre du groupe comprenant l'hydrogène et des restes alkyle, aryle, cycloalkyle et aralkyle, tout atome d'azote dans R étant séparé du silicium par au moins 3 atomes de carbone liés en séquence; R' est l'hydrogène, un reste alkyle ayant 1 à 8 atomes de carbone ou un reste méthylol; et n est au moins égal à 1;

(b) 2 groupes hydroxyle liés au silicium ou groupes hydrolysables ou condensables choisis entre les groupes alkoxy, acyloxy, amino et halogénalkoxy; et

(c) toute valence libre restante du silicium étant liée (1) à de l'oxygène qui est lié quant à lui à un autre atome de silicium pour former avec lui un siloxane, ou (2) à de l'hydrogène, ou (3) par des liaisons carbone-à-silicium, à un groupe organique monovalent choisi entre des groupes alkyle, acyle, cycloalkyle, aryle, alcaryle, aralkyle, alcényle, alcadiényle, cycloalcényle, halogénalkyle, halogénocycloalkyle, cyanalkyle, cyanaryle, cyanocycloalkyle, carboxyalkyle, carboxyaryle, carboxycycloalkyle, isocyanatoaryle, isocyanatocycloalkyle, alkylcarboxyalkyle, arylcarboxyalkyle, hydroxyalkyle, hydroxy(polyalkylènoxy)-alkyle, alcénoyloxyalkyle, époxyalkyle, époxyalkyloxyalkyle, aminoaryle et aminoalkyle.

2. Composition de liant suivant la revendication 1, dans laquelle le composé organique de silicium est un siloxane ayant, par molécule, 2 groupes hydroxyle liés au silicium ou 2 groupes hydrolysables ou condensables liés au silicium comme défini dans la revendication 1 et au moins 1 groupe lié au silicium de formule

$$[R'_2NC(O)-]_nR-$$

tel que défini dans la revendication 1 et toute valence libre restante du silicium est liée à de l'oxygène qui est lié quant à lui à une autre atome de silicium pour former avec lui le siloxane, ou bien, par des liaisons carbone-à-carbone, à un groupe organique monovalent tel que défini dans la revendication 1.

3. Composition de liant suivant la revendication 2, dans laquelle ledit siloxane est un disiloxane, un trisiloxane, un tétrasiloxane ou un pentasiloxane ou un tétrasiloxane cyclique.

4. Composition de liant suivant les revendications 1 à 3, dans laquelle le liant réticulable est une résine phénolique.

5. Utilisation de la composition de liant suivant les revendications 1 à 4 dans une composition de sable de fonderie contenant du sable de fonderie, la composition de liant et un catalyseur pour la résine réticulable.